# DEMANDE DE BREVET EUROPEEN

(11) **EP 4 375 535 A1**
(43) Date de publication de la demande: **29.05.2024**
(21) Numéro de dépôt: 23203085.8
(22) Date de dépôt: 11.10.2023
(51) Int. Cl.: F16F 15/134, F16F 15/123, F16F 15/131

(54) **GUIDAGE ET BUTEES DES ORGANES ÉLASTIQUES DANS UN VOLANT MOTEUR**

(30) Priorité: 03.11.2022 FR 2211456
(71) Demandeur: VALEO EMBRAYAGES, 80009 Amiens (FR)
(72) Inventeur: PANIAGUA, Adrian, 28947 Fuenlabrada (ES); GARCIA-LEON, David, 28947 Fuenlabrada (ES)
(74) Mandataire: Valeo Powertrain Systems

(57) **Abrégé**

L'invention décrit un volant moteur (2) pour un engin de mobilité, d'axe de révolution (X), comprenant
- une chambre (400) réalisée conjointement dans la matière d'une masse d'inertie (11, 210) principale et d'une jupe (15) du volant moteur, qui loge au moins en partie des organes élastiques (4), ménageant une cuvette (415) circonférentielle qui est destinée à guider directement les organes élastiques (4) ; et/ou
- au moins une pale de butée (5) qui est logée partiellement dans la chambre (400) entre les extrémités (40) voisines de deux organes élastiques (4) adjacents.

## Description

L'invention concerne un volant moteur comprenant des organes élastiques, en particulier pour un double volant amortisseur, équipant un groupe motopropulseur d'un engin de mobilité. Les moteurs à explosions ne génèrent pas un couple constant et présentent des acyclismes de par les explosions se succédant dans leurs cylindres. En résultent des vibrations indésirables sur la boîte de vitesses et/ou l'embrayage, qu'il convient de diminuer en équipant des transmissions d'un double volant amortisseur.

Le brevet FR 3 007 479, au nom de la Demanderesse, divulgue un double volant amortisseur comportant un volant primaire destiné à être couplé à un vilebrequin, et un volant secondaire destiné à être couplé à un arbre d'entrée d'une boîte de vitesses, le volant secondaire étant apte à pivoter par rapport au volant primaire, des organes élastiques s'étendant circonférentiellement et aptes à s'opposer au déplacement du volant secondaire par rapport au volant primaire, en étant comprimés contre un embouti du volant primaire et contre un embouti du couvercle primaire ou de fenêtres du voile secondaire.

Le double volant amortisseur comporte en outre des goulottes annulaires en portion de coupelles incurvées, de centre l'axe de pivotement, qui s'étendent autour des organes élastiques et comportent chacune une surface concave tournée en regard de l'organe élastique correspondant, c'est-à-dire radialement vers l'intérieur, de façon à ce que la goulotte sert à l'appui de l'organe élastique correspondant lorsque celui-ci se déforme par centrifugation en fonctionnement et vient se plaquer sur ladite surface concave. Cependant, l'appui des organes élastiques sur les goulottes génère des frottements et, ainsi, un couple d'hystérésis dégradant les performances de filtration du double volant amortisseur. En fonctionnement, ces organes élastiques sollicités exercent des pressions répétitives telles, qu'elles déforment la courbure des goulottes, leur fonction guidage n'étant plus assurée.

Mais ce procédé est précis, long et coûteux. Des corrections d'usinage de chambre sont élevées, pour y centrer spécifiquement les goulottes. L'encombrement est aussi élevé, notamment en cas d'ajout de couronne dentée de démarrage ou de synchronisation de la vitesse de rotation.

Le document DE 102018118246 A1 propose une autre solution de goulotte dont la matière est prolongée considérablement vers l'intérieur afin d'y être fixer en rapprochement de l'axe central de pivotement. Ceci assure le meilleur centrage fixe de la goulotte, mais ne limite en aucun cas sa robustesse, le couple d'hystérésis dégradé, son encombrement, les coûts et les difficultés de montage des goulottes.

Par ailleurs Il existe le besoin d'améliorer les butées des organes de ressorts du volant primaire. Les lignes de montage actuels des amortisseurs à paliers à roulements ne sont pas adaptées à ceux à paliers lisses, notamment axiaux ou à collerette, ces derniers s'échappant lors de la manipulation du volant primaire tourné à 180 degrés par l'opérateur. On peut réaliser selon FR 1760001, le fraisage ou usinage de logements des ressorts dans l'élément primaire, dont leurs parois d'arrêt exemptées de fraisage forment les butées de ressorts. Mais leurs géométries sont complexes, variables selon les besoins des ressorts, et longues à réaliser par fraisage, avec un nombre d'outillages coûteux et peu de marge d'erreur possible.

On peut ajouter selon US 5980387, une grande quantité de plots de butée, rapportés et fixés par rivetage verticalement à l'intérieur du logement de ressort réalisé par moulage ou pressage de l'élément primaire. Outre leur rivetage complexe et encombrante, il existe des risques de fuite de graisse.

Un même plot de butée varie selon la nature, dimension et nombre de ressorts à considérer, avec des variations de dimensions et formes importantes à considérer. Ce qui entraine des coûts, usure et perte importantes, ainsi qu'un obstacle à la normalisation du processus de fabrication des butées.

L'invention a pour but d'apporter une solution simple, efficace et économique à ce problème. Elle vise notamment à réduire les étapes de montage, la quantité de pièces à monter et à améliorer leur robustesse, en se limitant pour divers ressorts à une même gamme d'éléments de butée et de guidage.

L'invention propose un volant moteur pour un engin de mobilité, d'axe de révolution, comprenant :
- une masse d'inertie principale, configurée pour introduire une force dans le volant moteur ;
- une jupe issue du prolongement de la masse d'inertie principale, à l'extrémité de laquelle est définie une coiffe de montage apte à recevoir un couvercle ;
- un système d'amortissement comprenant au moins une série d'organes élastiques ;
- une chambre réalisée conjointement dans la matière de la masse d'inertie principale et de la jupe, qui loge au moins en partie les organes élastiques, et dont le bord externe de la chambre ménage une cuvette circonférentielle destinée à guider directement les organes élastiques, la cuvette ayant en section transversale une forme générale polygonale ou en arc de cercle complémentaire d'une forme générale en tronçon de tore des organes élastiques, délimitée au moins en partie par des pistes latérales et une piste centrale de contact de la chambre des organes élastiques,
- au moins l'une des pistes latérales étant formée d'une paroi plane de contact qui est de dimension strictement supérieure à une paroi plane de la piste centrale de contact de la cuvette ; et/ou
- un plan central de la cuvette étant formé perpendiculaire à la piste centrale de contact de la cuvette et contient un voile central du système d'amortissement; et
- au moins l'une des pistes latérales étant délimitée en section transversale par une paroi plane de contact définie selon un angle d'inclinaison par rapport au plan central, prolongée d'un côté par un premier rayon de courbure et par exemple de l'autre côté par un second rayon de courbure ;
- la piste latérale distale de la coiffe de montage comprenant une alternance de parois planes et de rayons de courbure définissant le fond de la chambre des organes élastiques.

Une telle forme de cuvette présente comme avantage de limiter les frottements relatifs entre les organes élastiques et la masse d'inertie principale, et permet ainsi d'améliorer le guidage des organes élastiques et de réduire le couple d'hystérésis dégradant les performances de filtration du double volant amortisseur.

L'invention propose un volant moteur pour un engin de mobilité, d'axe de révolution, comprenant :
- une masse d'inertie principale, configurée pour introduire une force dans le volant moteur ;
- une jupe issue du prolongement de la masse d'inertie principale, à l'extrémité de laquelle est définie une coiffe de montage apte à recevoir un couvercle ;
- un système d'amortissement comprenant au moins une série d'organes élastiques ;

Le volant moteur peut être nommer par la suite le volant amortisseur.

Selon un premier aspect, le volant moteur est remarquable en ce qu'il comprend en outre une chambre des organes élastiques réalisée conjointement dans la matière de la masse d'inertie principale et de la jupe, qui loge au moins en partie les organes élastiques, et dont le bord externe de la chambre ménage une cuvette circonférentielle. Cette cuvette circonférentielle est destinée à guider directement les organes élastiques.

Grâce à cette cuvette, aucune pièce supplémentaire n'est ainsi requise. Cette cuvette forme un élément de guidage intégré directement au volant moteur et à la chambre des organes élastiques. Cette cuvette est ainsi plus robuste, les déformations sont limitées. On améliore le comportement des organes élastiques.

L'usinage de la chambre n'a plus besoin d'être contrôlé et rectifié. D'où un gain considérable. Les étapes de montage sont réduites. L'encombrement est également limité.

Ce premier aspect peut présenter l'une ou l'autre des caractéristiques décrites ci-dessous combinées entre elles ou prises indépendamment les unes des autres :
- La cuvette circonférentielle peut délimiter, avec la coiffe de montage de la jupe, au moins un rebord en surplomb de la chambre des organes élastiques, en particulier une série de rebords en surplomb de la chambre des organes élastiques. Dès lors, le fond de la cuvette circonférentielle définit un diamètre extérieur qui est supérieur au diamètre intérieur de la coiffe de montage de la jupe ;
- La cuvette circonférentielle peut délimiter, avec la masse d'inertie principale, une gorge à angle arrondie de la chambre des organes élastiques. Cette gorge à angle arrondie peut former au moins un quart de cercle.
- Cette gorge à angle arrondie peut s'étendre de 45% jusqu'à 75% du total de la cuvette circonférentielle ;
- La cuvette peut avoir en section transversale, une forme générale polygonale ou une forme générale d'arc de cercle complémentaire d'une forme générale en tronçon de tore des organes élastiques ;
- La chambre et en particulier la cuvette circonférentielle peut délimiter en section transversale deux pistes latérales et une piste centrale de contact. La cuvette peut être délimitée au moins en partie par des pistes latérales et une piste centrale de contact ;
- Un plan central de la cuvette peut être formée perpendiculaire à la piste centrale de contact de la cuvette ;
- Un plan central de la cuvette peut contenir un voile central du système d'amortissement ;
- Les pistes latérales de contact peuvent être disposées radialement de part et d'autre d'un plan central de la cuvette perpendiculaire à l'axe de révolution ;
- Au moins l'une des pistes latérales peut être formée d'une paroi plane de contact ; Cette paroi plane de contact peut être de dimension strictement supérieure à une paroi plane de la piste centrale de contact ;
- Alternativement, cette paroi plane de contact d'une piste latérale peut être de dimension strictement inférieure à une paroi plane de la piste centrale de contact ;
   A titre d'exemple, la piste latérale distale de la coiffe de montage comprend une alternance de parois planes et de rayons de courbure définissant le fond de la chambre des organes élastiques ;
- Au moins l'une des deux pistes latérales peut être délimitée en section transversale par une paroi plane de contact définie selon un angle d'inclinaison par rapport au plan central. Cette paroi plane de contact peut être prolongée d'un côté par un premier rayon de courbure. En outre, cette paroi plane de contact peut être prolongée par exemple de l'autre côté par un second rayon de courbure ;
- Chaque piste latérale peut comprendre une paroi plane de contact prolongée par au moins un rayon de courbure. Les rayons de courbures peuvent avoir pour centre un même axe de construction de la cuvette ;
- Les rayons de courbures peuvent s'étendre sur des dimensions courbées différentes ;
- Les parois planes de contact peuvent s'étendre sur des dimensions rectilignes différentes ;
- Les parois planes de contact peuvent être espacées axialement entre elles ;
- La cuvette peut comprendre en section transversale, par rapport au plan d'extension radiale de la jupe:
- une première paroi plane p1 inclinée selon un premier angle d'inclinaison ;
- une paroi plane central p0 contenu dans ou parallèle au plan d'extension radiale ;
- de préférence une deuxième paroi plane inclinée selon un deuxième angle d'inclinaison ;
   depuis lesquelles sont configurés l'appui et le centrage des organes élastiques.
- Dans une telle situation, la cuvette peut comprendre en section transversale, des rayons de courbure espacées alternativement entre lesdites paroi planes de la cuvette ;
- La chambre des organes élastiques peut définir en son centre un diamètre médian ;
- La chambre des organes élastiques peut être de forme circulaire, de centre l'axe de révolution ;
- La chambre des organes élastiques peut être configurée pour être étanche et contenir un agent lubrifié ;
- La cuvette circonférentielle peut être de forme discontinue autour de l'axe de révolution ;
- La coiffe de montage de la jupe peut être en section transversale de forme tronconique ;
- La cuvette circonférentielle comprend un fond ménagé au-delà du diamètre intérieur de la coiffe de montage de la jupe. Le fond de la cuvette peut délimiter avec un diamètre médian de la chambre des organes élastiques, une piste latérale de contact, notamment une piste de guidage des organes élastiques qui peut être parcourue par le centre de gravité des organes élastiques ;
- La jupe de montage, et notamment la coiffe de montage, peut être dimensionnée de telle manière qu'une partie des organes élastiques dépasse la coiffe de montage. Dès lors le couvercle destiné à être monté sur la jupe de montage peut être enfoncé pour y loger à l'intérieur ladite partie surpassant ;
- Dans un mode de réalisation particulier, le volant moteur comprend une couronne de démarreur ménagée dans la jupe de montage. La couronne de démarreur peut être forgée sous forme d'arches.
- L'intérieur des arches de la couronne de démarreur peut délimiter une paroi concave discontinue ;
- Alternativement, la couronne de démarreur peut être forgée sous forme de tronçons espacés. Les formes en arches ou en tronçons sont définies selon le besoin en inertie sur la périphérie externe de la jupe ;
- Dans un mode de réalisation particulier, le volant moteur comprend une couronne de synchronisation ménagée dans la masse d'inertie principale, en particulier dans un épaulement issu de la masse d'inertie principale. Cette couronne de synchronisation peut être forgée sous forme d'arches.
- Ces arches sont alors configurées pour être disposées en regard d'un capteur apte à délivrer un signal représentatif de la position angulaire et/ou de la vitesse de la couronne de synchronisation ;
- L'épaulement peut être de forme trapézoïdale. De cette manière, l'une des faces réalise les arches de couronne de synchronisation, de préférence la plus éloignée de l'axe de révolution ;
- Alternativement, la couronne de synchronisation peut être forgée sous forme de tronçons espacés ;
- Dans un mode de réalisation particulier, la jupe de montage comprend en section transversale un amincissement de matière, qui peut s'étendre de 20% jusqu'à 55% de l'épaisseur initiale de la jupe, de préférence de 20% jusqu'à 45% de l'épaisseur initiale de la jupe ;
- Cet amincissement de matière est délimité entre les arches de la couronne de démarreur et la cuvette ;
- Dans un mode de réalisation particulier, le volant moteur est réalisé par différents traitements thermiques ou de surface, appliqués sur certaines parties du volant moteur.
- Ces traitements thermiques sont réalisés, de préférence sur les pièces finies, pour en changer les qualités et les propriétés mécaniques superficielles, notamment pour renforcer localement leur rigidité, autrement dit pour améliorer leur dureté, la résistance à la corrosion et à l'usure selon la fonction qui leur est assignée ;
- La couronne de démarreur comprend une dureté qui peut être supérieure à celle de la cuvette ;
- La cuvette comprend une dureté qui peut être supérieure à celle du reste de la masse d'inertie principale, et notamment qui peut être supérieure à la dureté de la couronne de synchronisation ;

Selon un deuxième aspect, le volant moteur est remarquable en ce qu'il comprend au moins une pale de butée logée partiellement dans la chambre des organes élastiques.

Cette pale de butée est logée partiellement dans la chambre des organes élastiques

Cette pale de butée est logée entre les extrémités voisines de deux organes élastiques adjacents.

Avantageusement, la masse d'inertie principale comprend un moyeu central dont le prolongement de matière forme un plateau central, ladite chambre délimitant l'extérieur du plateau central;

Cette pale de butée est logée partiellement à l'intérieur de la masse d'inertie principale et notamment du plateau central. Cette pale de butée est également rapportée fixement à la masse d'inertie principale, et notamment du plateau central.

On entend par « pale de butée » au moins une feuille faisant office de butée d'organes d'élastiques et rapportée dans la masse d'inertie principale, qui remplace une géométrie emboutie ou rivetée de plots au fond de la chambre du volant primaire. La pale réduit les contraintes mécaniques (stress en anglais).

Sa capacité de couple transmissible est accrue, en comparaison de l'état d'art actuel des butées rivetées, par exemple elle est applicable à des couples élevés supérieurs à 280 newton/mètre.

On entend aussi par « pale de butée » un organe additionnel en porte-à-faux, logé à l'intérieur du moyeu central et débouchant dans la chambre. En prolongeant radialement sa matière, le moyeu central du volant est adapté en une forme de plateau central de matière, destiné à recevoir et fixer la pale.

En fixant la pale à l'intérieur du moyeu central, de préférence au plus près de l'axe de révolution, il n'est alors plus nécessaire de percer le fond de la cavité du volant. On limite les fuites de graisse. La pale de butée est montée de manière ajustable et adaptable, avant ou en même temps que le montage des ressorts. Les coûts, quantités de pièces et d'étapes de montage sont enfin réduits. La chambre présente une surface homogène, ne nécessitant plus d'extrusions complexes pour loger chaque ressort.

Les logements de deux ressorts adjacents sont désormais délimités par une pale de butée.

Une plus grande tolérance, marge d'erreur et correction est possible, pour bloquer angulairement les extrémités des ressorts et les contenir à l'intérieur du volant. L'épaisseur des pièces voisines peut être affinée (voile, couvercle) en les réduisant à une simple tôle de métal. Ce qui limite l'encombrement et le poids dudit volant.

Ce deuxième aspect peut présenter l'une ou l'autre des caractéristiques décrites ci-dessous combinées entre elles ou prises indépendamment les unes des autres :
- L'au moins une pale de butée peut être réalisée dans au moins une feuille de tôle métallique. Cette feuille peut être d'une épaisseur inférieure ou égale à la moitié de l'épaisseur du plateau central;
- L'au moins une pale de butée peut être monocouche. A l'inverse, l'au moins une pale de butée peut être multicouche, c'est-à-dire composée d'un empilement axial de plusieurs couches assemblées entre elles, par exemple par collage, ou par soudure, ou par des moyens de fixation rapportés en particulier par rivetage ;
   A titre d'exemple, un nombre de couches assemblées compris entre trois et dix ;
- L'au moins une pale de butée peut être d'élongation radiale, c'est-à-dire de forme oblongue. La pale de butée peut être d'une élongation radiale supérieure ou égale à 45% à l'extension radiale du plateau central, de préférence supérieure ou égale à 1,4 fois l'extension radiale de la chambre ;
- L'au moins une pale de butée peut être polygonale, en forme de trapèze, ou circulaire ou hélicoïdale. Une pale de butée peut être en forme sinusoïdale, par exemple en forme de « 8 » ou encore de « V » ou « T ». Une pale de butée peut être en forme de clé, la tête formant la butée des ressorts. Différentes épaisseurs d'une même forme de pale sont possibles, constituant une gamme d'épaisseurs variables prédéfinies ;
- L'au moins une pale de butée peut être de forme tronconique. L'au moins une pale de butée peut être de forme symétrique, l'axe S de symétrie étant perpendiculaire à l'axe de révolution X de la cavité ;
- Le volant moteur peut comprendre une série de pales de butée, de préférence deux, qui sont réparties uniformément ou angulairement autour de l'axe de révolution X, de préférence réparties par paires.
- Le volant moteur peut comprendre au moins une paire de pales de butée. Pour chaque paire, les deux pales de butée peuvent être disposées l'un de l'autre par rapport à l'axe de révolution, de manière diamétralement opposées. En particulier les deux pales partagent un même axe S de symétrie ;
- Dans un mode de réalisation particulier, l'au moins une pale de butée peut être retenue à l'intérieur d'une empreinte ménagée dans le plateau central. La pale de butée et ladite empreinte sont de formes complémentaires. L'au moins une empreinte du plateau central peut s'étendre radialement depuis le diamètre extérieur du plateau central. Ladite empreinte peut s'étendre radialement jusqu'à un premier cercle d'implantation d'organes de fixation de la pale de butée, destiné à être fixé sur le plateau central. Les fuites de graisse sont alors minimisées. Une empreinte du plateau central peut comprendre des bords radiaux. L'extérieur de ladite empreinte débouche alors radialement dans la chambre ;
- L'au moins une pale de butée peut être rapportée fixement au plateau central par des moyens de fixation.
- Au moins certains des moyens de fixation d'une pale de butée sont agencés au plus près de l'axe de révolution X, de préférence depuis le diamètre intérieur de l'empreinte.

A titre d'exemple, des moyens de fixation sont reçus dans des orifices de montage de la pale de butée. En particulier, des moyens de fixation rapportés, reçus dans des orifices de montage du plateau central, ou des moyens de fixation issus de matière du plateau central, par exemple sous forme d'ergots.

A titre d'exemple, une retenue de matière ménagée depuis le bord radialement interne d'une empreinte ;
- Dans un mode de réalisation particulier, au moins certains des moyens de fixation d'une pale de butée peuvent être réalisés par collage, ou par soudage ou encore par toute autre matière de fixation ;
- Dans un mode de réalisation particulier, au moins certains des moyens de fixation d'une pale de butée peuvent être issus de matière avec les bords de ladite empreinte correspondante ;
   Les bords radiaux d'une empreinte peuvent être en forme de contre-dépouilles, afin de retenir radialement la pale de butée, en bloquant en particulier tout déplacement axial en direction de la cavité. Cette géométrie permet d'optimiser l'ajustement de la pale avec son empreinte, de réduire les efforts de cisaillement lors de la compression des ressorts ainsi que la répartition des efforts tangentiel entre l'empreinte et le contour de la pale ;
- Dans un mode de réalisation de l'invention, au moins certains des moyens de fixation d'une pale de butée peuvent comprendre un ou plusieurs éléments de rétention axiale de ladite pale de butée ;
- Un élément de rétention axiale peut être ménagé partiellement depuis un bord radial de l'empreinte, par exemple sous forme d'au moins une retenue de matière. Une empreinte peut comprendre au moins trois retenues de matière ménagés localement à certains endroits d'un bord radial de l'empreinte.
- A titre d'exemple, chaque élément de rétention axiale est issu de la matière de l'empreinte, par exemple des renflements de matière ou des points d'écrouissage discontinus issu de l'empreinte.
- Une retenue de matière peut être nommée un point d'écrouissage, configuré pour agir par compression sur une section de la pale. Une retenue de matière peut être réalisée par renflement de matière, par exemple pour former une bosse ou un bourrelet de matière ;
- Une retenue axiale de matière peut être formée depuis chacun des bords de l'empreinte ;
- Au moins certains moyens de fixation de la pale de butée sont agencés au plus loin de l'axe de rotation, de préférence depuis le diamètre extérieur de l'empreinte, autrement dit son ouverture sur la chambre ;
- Dans un mode de réalisation particulier, au moins certains des moyens de fixation d'une pale de butée sont réalisés au centre du corps de la pale ;
- Une pale de butée peut être pourvue d'un seul orifice de montage, ou en variante, de plusieurs orifices, de préférence au nombre de deux, disposés radialement au même niveau.
- En complément, une empreinte peut être pourvue d'un seul orifice de montage, ou en variante, de plusieurs orifices, de préférence au nombre de deux, disposés radialement au même niveau, destiné(s) à être alignés axialement avec celui (ceux) de la pale correspondante.
- Ces orifices de montage sont traversant, par exemple de formes oblongues ou circulaires ou combinés, afin d'assurer le montage et la liaison sans jeu radial, angulaire et axial de la pale dans son empreinte ;
- Dans un autre mode de réalisation particulier, une pale de butée peut être pleine, c'est-à-dire exemptée d'orifice de montage. L'empreinte peut être pleine, exemptée d'orifice de montage. Les fuites sont évitées ;
- Dans un mode de réalisation particulier, au moins certains des moyens de fixation d'une pale de butée sont réalisés par coopération de formes, par exemple un ou plusieurs ergots ménagés en saillie depuis l'empreinte et traversant ladite pale de butée correspondante ;
- Dans un autre mode de réalisation particulier, au moins certains des moyens de fixation d'une pale de butée sont réalisés par une ou plusieurs pièces rapportées, telles que des entretoises, des goupilles ou encore des rivets de fixation, reçues par exemple dans des orifices de montage respectivement d'une pale de butée et d'une empreinte correspondante. D'où l'assurance d'un alignement précis des pièces et le meilleur contact possible de la pale au fond de l'empreinte, lors de l'étape de fixation de la pale ;
- Dans un mode de réalisation particulier, l'au moins une pale de butée peut être insérée avec jeu à l'intérieur de l'empreinte, pour la rentrer initialement dans l'empreinte sans pression ni contrainte ;
- Dans un mode de réalisation particulier, l'empreinte peut être dimensionnée pour réaliser des précontraintes radiales discontinues sur la pale de butée, lors de son insertion dans l'empreinte ou lors de son montage avec les moyens de fixation dans l'empreinte. La pale de butée peut ainsi être pincée, en particulier depuis les bords latéraux de l'empreinte, de préférence depuis l'ouverture de l'empreinte ;
- Dans un mode de réalisation particulier, la chambre peut comprendre des marquages d'arrêt additionnels destinés à recevoir des extrémités voisines des ressorts amortisseurs. Les marquages d'arrêt peuvent être répartis angulairement pour centrer et arrêter en partie les extrémités voisines des ressorts. Les marquages d'arrêt de la chambre sont des logements d'arrêt de formes sensiblement concaves, adaptées à améliorer l'arrêt angulaire des extrémités voisines des ressorts ;
- Dans un mode de réalisation de l'invention, la pale de butée peut comprendre un angle d'évasement α1 compris entre 110 et 195 degrés, de préférence sur chaque bord latéral de la pale de butée, adapté à recevoir l'extrémité des ressorts ; Soit un total de deux angles d'évasement par pale de butée, de valeur identique afin que la force de réaction des ressorts soit la même des deux côtés de la pale de butée ;
- Cet angle d'évasement est adapté en fonction du diamètre d'implantation de l'extrémité d'un ressort. Plus le diamètre d'implantation du ressort est petit, plus l'angle d'évasement α1 est réduit ;
- A titre d'exemple, l'angle d'évasement α1 peut être par défaut un angle d'environ 110 degrés, lors du montage des ressorts l'opérateur ajustera l'angle d'évasement, pour adoucir les bords évasés de la tête de butée, par rabotage, ponçage, polissage... ou tout autre retrait de matière ;
- Dans un mode de réalisation particulier de l'invention, l'au moins une pale de butée peut comprendre
   - un corps de retenue logé à l'intérieur du plateau central, et
   - une tête de butée issue du prolongement du corps de retenue, de forme évasée, et adaptée aux ressorts ;
- La tête de butée est pleine, exemptée d'évidement de matière (ni orifice ni bifurcations de matière
- La tête de butée comprend une élongation radiale qui peut s'étendre du diamètre intérieur de la chambre jusqu'au diamètre extérieur de la chambre ;
- Le corps de retenue comprend une élongation radiale qui est 1,2 fois supérieure à l'élongation radiale de la tête de butée, en particulier 1,5 fois supérieure ou égale à l'élongation radiale de la tête de butée ;
- La tête de butée peut définir avec le corps de retenue un angle d'évasement α1.
- L'angle d'évasement de la pale de butée est compris entre 110 et 195 degrés, pour une coopération améliorée avec les extrémités des ressorts. On ajuste ainsi la tête de butée selon les besoins des extrémités voisines des ressorts, pour les contenir à l'intérieur du volant. Cet angle d'évasement est défini pour rectifier les tranches ou bords évasés de la tête, et ainsi améliorer leurs coopération et blocage.
- A titre d'exemple, la tête de butée définit avec le corps de retenue un angle d'évasement compris entre 130 et 160 degrés. La pale de butée comprend dès lors un rétrécissement de matière de sorte à délimiter conjointement la tête de butée et le corps de retenue sous formes évasées ;
- Dans un mode de réalisation de l'invention, le moyeu central peut comprendre au moins un dégagement de matière, de préférence usiné, destiné à contenir une douille d'arrêt, de préférence axiale ;
- Ce dégagement de matière peut être réalisé le long du moyeu central, autrement dit d'extension axiale ;
- Cette douille d'arrêt peut être contenue le long du moyeu central, autrement bloquée axialement ; On entend par douille d'arrêt un palier lisse, d'extension soit radiale soit axiale, ou encore une pièce cylindrique creuse, par exemple de type rondelle en métal ;
   L'invention a également pour objet, selon un troisième aspect, une pale de butée pour des ressorts d'un volant moteur, comprenant une forme tronconique évasée, sous forme de tête de butée destinée à venir angulairement en butée contre des extrémités voisines des ressorts du volant moteur.

La pale de butée comprend une élongation radiale, sous forme d'un corps de retenue destiné à être rapporté sur un moyeu central d'un volant moteur, de préférence 1,5 fois supérieure ou égale à l'élongation radiale de ladite tête de butée.

L'invention a également pour objet, selon un quatrième aspect, un moyeu central de volant moteur, dont le prolongement de matière forme un plateau central de matière, l'extérieur du plateau central étant délimité par une unique chambre d'axe de révolution X, dans lequel le plateau central comprend une série d'empreintes destinées à loger une série de pales de butée.

L'invention propose également pour objet, selon un cinquième aspect, un kit d'assemblage d'un volant moteur, comprenant au moins :
- une masse d'inertie principale comprenant une chambre comprenant une cuvette circonférentielle selon le premier aspect de l'invention; et/ou ;
- une série de pales de butée selon le deuxième ou troisième aspect de l'invention ; et/ou
- un moyeu central de volant moteur selon le quatrième aspect de l'invention ;
et - des ressorts amortisseur, de formes initiales droites ou incurvées ;

Le kit d'assemblage peut comprendre en outre, des éléments de rétention axiale des pales de butée.

Le kit d'assemblage peut comprendre en outre, au sein du moyeu central, une unique chambre d'axe de révolution X délimitant l'extérieur du plateau central de matière, à l'intérieur de laquelle sont logés les ressorts.

Les deuxième, troisième, quatrième et cinquième aspects de l'invention peuvent reprendre tout ou partie des caractéristiques mentionnées précédemment, notamment dans le premier aspect de l'invention.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux figures annexées.
- Fig. 1 est un schéma général en perspective d'un groupe motopropulseur comprenant au moins un volant amortisseur selon l'invention, ici un double volant amortisseur ;
- Fig. 2 illustre une cuvette de la chambre du volant moteur selon un premier mode de réalisation ;
- Fig. 2A et Fig. 2B sont des coupes radiales de la cuvette du premier mode de réalisation ;
- Fig. 3 illustre une cuvette de la chambre du volant moteur selon un deuxième mode de réalisation ;
- Fig. 3A illustre une variante de la couronne de synchronisation du volant moteur selon l'invention ;
- Fig. 3B et Fig. 3C sont des coupes radiales de la cuvette du deuxième mode de réalisation ;
- Fig. 4A illustre en perspective une pale de butée pour le volant moteur selon l'invention ;
- Fig. 4B illustre un moyeu central du volant moteur à l'intérieur duquel est fixé la pale de butée de la Fig. 4A
- Fig. 4C illustre des empreintes seules du moyeu central selon l'exemple de la Fig. 4B ;
- Fig. 4D est une vue d'un couvercle du volant moteur selon l'exemple de la Fig. 4B ;
- Fig. 4E illustre en coupe radiale, un exemple de double volant amortisseur selon la Fig. 4B ;
- Fig. 5 et Fig. 5A illustrent un autre exemple de double volant amortisseur ;
- Fig. 6 et Fig. 6A illustrent un autre exemple de pale de butée pour le volant moteur selon l'invention ;
- Fig. 6B illustrent un autre exemple de pale de butée multicouche pour le volant moteur selon l'invention, similaire à la Fig. 6A;
- Fig. 7A et Fig. 7B est un exemple de moyeu central avec et sans pales de butée selon la Fig. 6A;
- Fig. 8A et Fig. 8B est un autre exemple moyeu central avec et sans pales de butée ;
- Fig. 9A et Fig. 9B est un autre exemple moyeu central avec et sans pales de butée ;
- Fig. 10 est une coupe axiale de moyeux d'un double volant amortisseur, par exemple issu du premier mode ou du deuxième mode de réalisation de l'invention ;
- Fig. 11 est une vue détaillée des moyeux du double volant amortisseur de la Fig. 10 ;
- Fig. 12 est un autre exemple de moyeu central multi bloc d'un double volant amortisseur ;
- Fig. 13 est un autre exemple de moyeu central monobloc d'un double volant amortisseur ;

Dans la suite de la description et des revendications, on utilisera à titre non limitatif et afin d'en faciliter la compréhension, les termes :
- un « engin de mobilité » : les véhicules automobiles, passagers, mais aussi industriels, notamment les poids lourds, les véhicules de transport en commun ou les véhicules agricoles, mais également tout engin de transport permettant de faire passer d'un point à un autre un être vivant et/ou un objet ;
- " avant " ou " arrière " selon la direction par rapport à une orientation axiale déterminée par l'axe X principal de rotation de la transmission de l'engin de mobilité ; intérieur / interne " ou " extérieur / externe " par rapport à l'axe X et suivant une orientation radiale, orthogonale à l'orientation axiale ;

Dans la suite de la description et des revendications, on peut indexer certains éléments comme : les premier et deuxième éléments/organes de fixation, les premier et deuxième arbres, les première et deuxième pales de butée etc. Il s'agit d'un simple indexage pour différencier et nommer des éléments proches mais non identiques. L'indexation n'implique pas une priorité d'un élément par rapport à un autre et on peut aisément inter-changer de telles dénominations sans sortir du cadre de la description.

On a représenté dans le premier mode de réalisation au moins un volant moteur **2** selon l'invention, nommé aussi amortisseur de torsion, issu d'un double volant amortisseur **1,** comprenant
- un arbre menant **A1** connecté à un moteur **A** par exemple à combustion interne ;
- un arbre mené **A2** connecté à une boite de vitesses **B ;** et
- un embrayage **7** disposé entre la boite de vitesses **B** et le moteur à combustion interne **A.**

L'embrayage **7** peut être de type humide ou à sec. Le volant moteur **2** est destiné à être disposé au niveau d'un mécanisme de transmission d'un véhicule automobile.

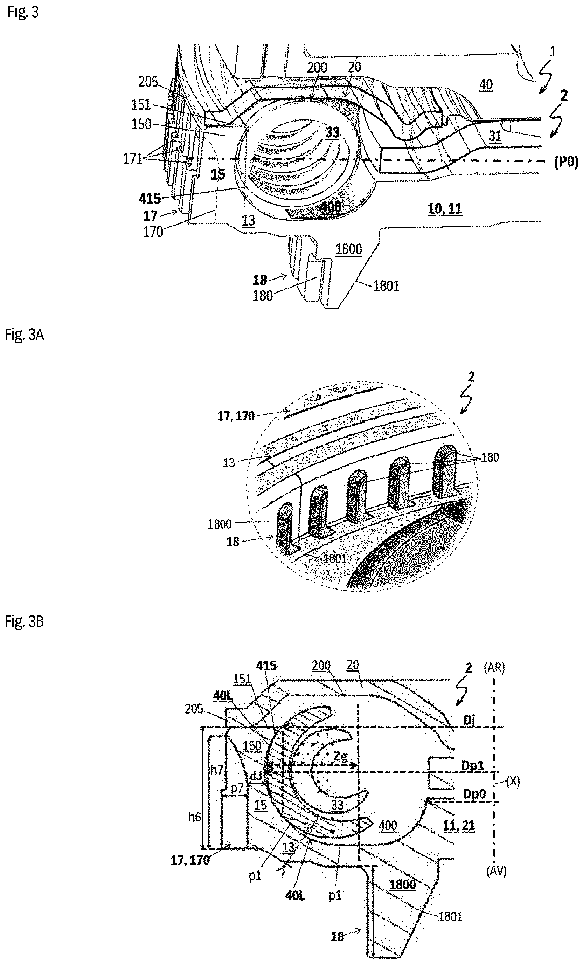

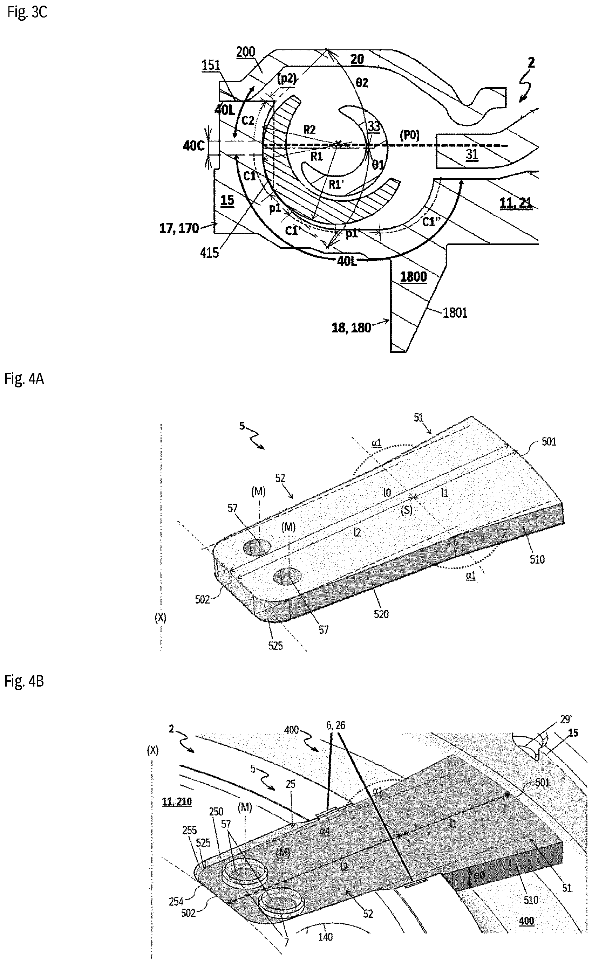

Les Fig. 3, Fig. 4E, Fig. 5 et Fig. 12 à Fig. 13 sont des exemples d'un double volant amortisseur **1** comprenant des premier et deuxième éléments, respectivement appelés volant primaire d'inertie et volant secondaire d'inertie, qui sont constitués respectivement une première masse d'inertie principale **11,** configurée pour introduire une force dans le volant moteur ; et deuxième masse d'inertie principale **22.**

La deuxième masse d'inertie principale **22** est montée mobile par rapport à la première masse d'inertie principale **11** autour d'un axe **X** de révolution nommé aussi axe central de rotation.

En outre, une jupe **15** issue du prolongement de la masse d'inertie principale, à l'extrémité libre de laquelle est définie une coiffe de montage **150** recevant un couvercle **20** de fermeture de la chambre. La jupe **150** de montage définit un plan d'extension radiale **Pj.**

La coiffe de montage **150** peut définir un diamètre intérieur **Dj** de la jupe.

Ces première et deuxième masses d'inertie principale **11, 22** ont respectivement un moyeu primaire **215** et un moyeu secondaire **225.** La rotation entre la première masse d'inertie principale **11** et la deuxième masse d'inertie principale **22** est par exemple assurée par un roulement ou un palier lisse composé de douilles **8, 9.** Les moyeux primaire **215** et secondaire **225** peuvent constituer ici ledit moyeu central **21.**

Le volant moteur **2** peut comprendre un moyeu central qui est destiné à être connecté à l'arbre menant **A1.** Le moyeu central **21** peut être composé de deux blocs **210, 200.**

Le volant moteur **2** comprend en outre un système d'amortissement **30,** composé en particulier d'un ou plusieurs organes élastiques **4,** ici un ou plusieurs ressorts, disposé(s) entre les volants primaire et secondaire d'inertie, en particulier dans une chambre **400** formée dans le volant moteur.

On remarque ici que la chambre **400** est unique et peut contenir un bain de graisse afin de garder lubrifier les ressorts. La chambre **400** est de préférence une cavité circulaire usinée, forgée ou moulée.

Chaque organe élastique **4** comprend à ses deux extrémités **40** une forme de spires. Ces derniers sont configurés pour amortir les acyclismes de rotation produits par le moteur du véhicule automobile.

Dans la suite de la description, on considérera un système d'amortissement **30** comprenant deux ressorts hélicoïdaux. Ces deux ressorts disposés en parallèle mais la présente invention s'applique aussi à des système d'amortissement **30** comprenant un seul ressort ou un nombre de ressorts supérieur à deux.

Le système d'amortissement **30** peut comprendre aussi un dispositif pendulaire (non illustré) configuré pour améliorer la filtration des acyclismes de rotation. La présente invention peut aussi s'appliquer à des système d'amortissement **30** comprenant des ressorts droits ou des ressorts disposés en série ou une combinaison de ces caractéristiques précédentes.

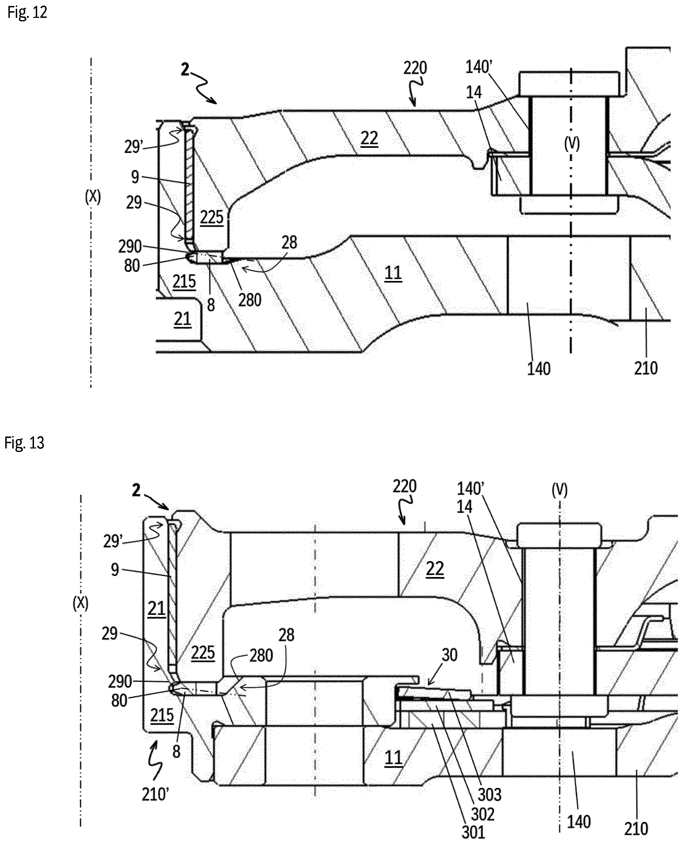

Le double volant amortisseur **1** peut comprendre en outre un système d'hystérésis **30',** tel qu'illustré en Fig. 13. C'est ici un empilement de rondelles **301, 302** de friction, intercalées entre les premier et deuxième masses d'inertie principales **210, 220** Ce volant amortisseur **2** et notamment la première masse d'inertie principale **11,** est remarquable en ce qu'elle comprend un moyeu central **21** d'extension radiale **p0** qui est supérieure à l'extension radiale d'une chambre **400.** L'extension radiale de cette chambre est définie entre les diamètres intérieur **Dp0** et extérieur **Dp1.**

Par ailleurs, le prolongement de matière **p0** du moyeu central **21** forme un plateau central **210** de diamètre extérieur **Dp1,** conçu pour réaliser une partie des butées au plus près des organes élastiques **4.**

En outre, la première masse d'inertie principale **11** comprend une collerette **291** de centrage du deuxième élément. La collerette **291** de centrage est destinée à recevoir la douille **8** d'arrêt axiale et une douille **9** d'arrêt radiale centrant le deuxième élément.

Le moyeu central **21** est remarquable en ce qu'il comprend au moins un dégagement de matière **28, 29** destiné à contenir une douille **8, 9** d'arrêt, de préférence usiné le long dudit moyeu central.

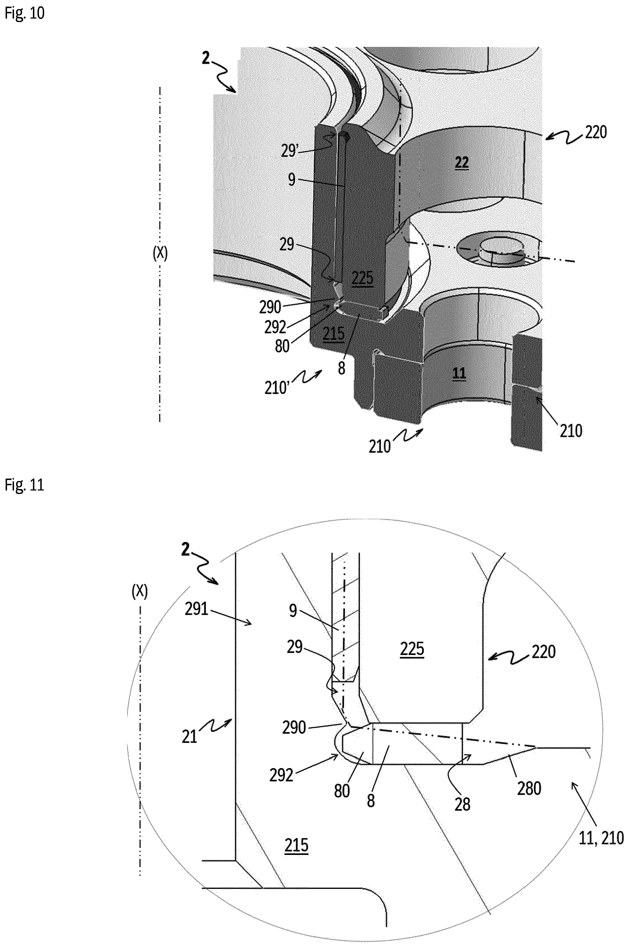

Deux dégagements de matière **28, 29** sont usinés depuis un renfoncement **292** de la collerette de centrage, comme illustrés aux Fig. 11 à Fig. 13. Chaque dégagement de matière **28, 29** est délimité en butée par au moins un épaulement de matière **280, 290.** Ainsi le dégagement de matière **28** retient la douille **8** d'arrêt axiale, ici via un épaulement de matière **280.** Le dégagement de matière **29** retient une douille **9** d'arrêt radiale, ici via l'épaulement de matière **290.**

Par ailleurs, le système d'amortissement **30** peut comprendre un voile **14** configuré pour venir en appui et comprimer les ressorts **4** en fonctionnement. Alternativement, le voile **14** peut être disposé entre deux série de ressorts (cas d'un amortisseur de torsion à plusieurs étages de ressorts),
- une première série de ressorts disposée entre la première masse d'inertie principale **11** et le voile **14** et
- une deuxième série de ressorts étant disposée entre le voile **14** et la deuxième masse d'inertie principale **22** (ou plus généralement un élément fixé au deuxième élément par exemple une rondelle de guidage).

En outre le volant moteur **2** comprend des demi-butées ou butées dites butées inférieures et supérieure, ménagées à chaque extrémité **40** des organes élastiques pour leur compression par exemple par le voile. Toutes ces butées citées s'assurent de répartir l'appui des ressorts **4,** et évitent un déséquilibre pouvant endommager le ressort **4** en cas de couple important transmis par l'amortisseur de torsion.

Les butées de la partie supérieure sont formées par une série d'emboutis **35'** dans le couvercle **20.** Par ailleurs, les organes élastiques **4** sont par exemple des ressorts cintrés disposés ensemble dans une chambre **400** en forme de chambre de la première masse d'inertie principale, sur 360 degrés. La chambre **400** est obtenue par un seul outillage, qui simplifie l'étape de fraisage.

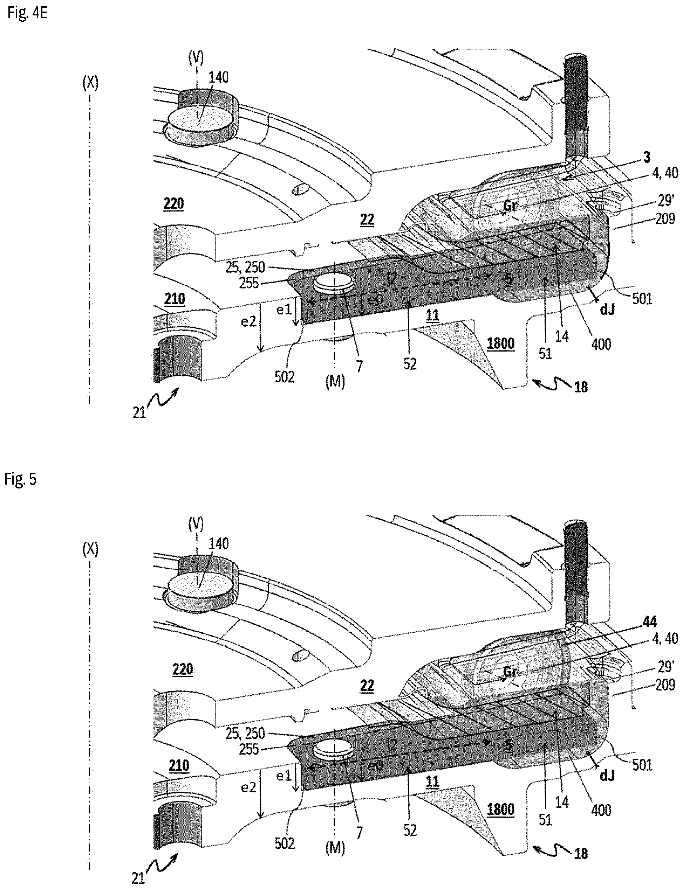

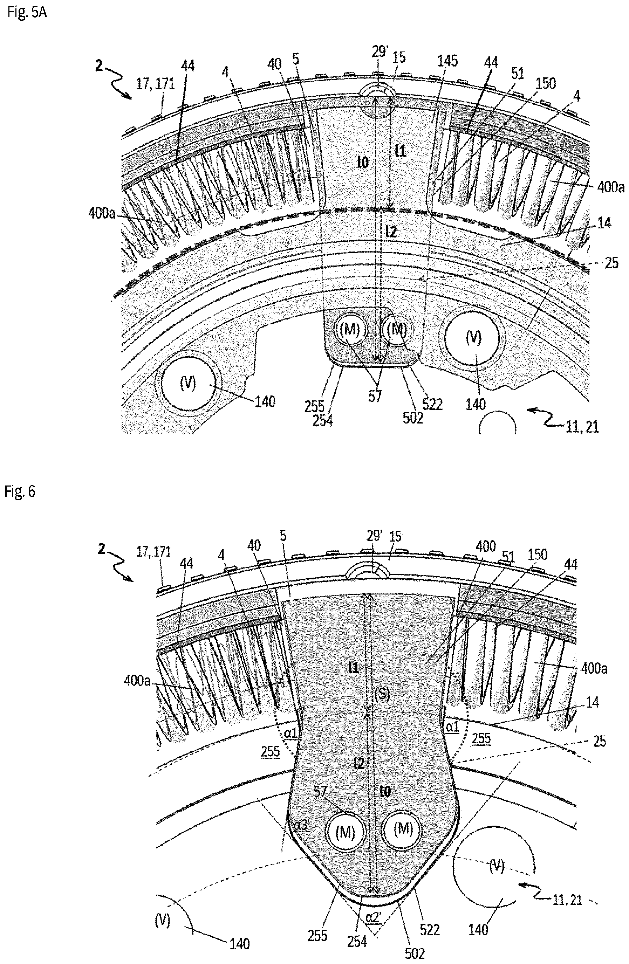

En générale, une chambre des organes élastiques peut comprendre une seule piste de guidage formée dans le fond la chambre **400** et en outre des goulottes **4,** tel qu'illustrés à titre d'exemple sur la Fig. 5.

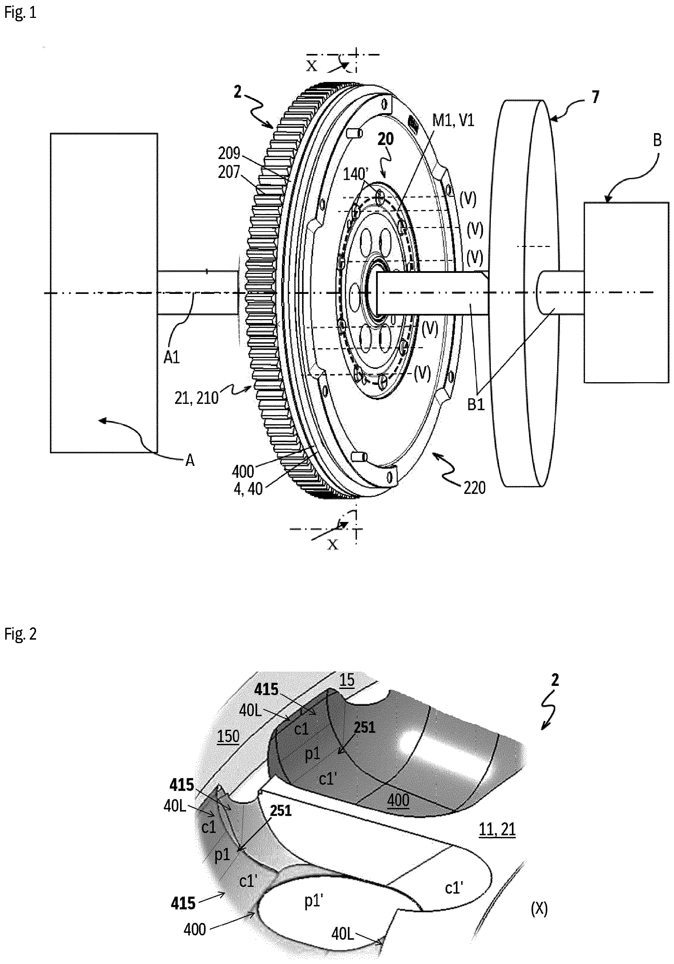

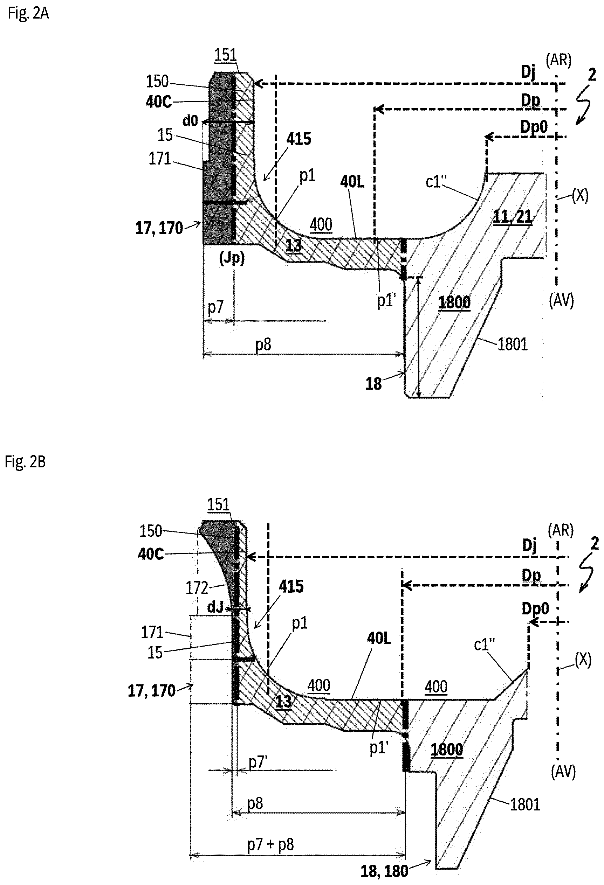

Dans les premier et deuxièmes modes de réalisation, on a illustré au contraire que la chambre **400** est exemptée de goulotte de guidage pour les organes élastiques. En effet, la chambre **400** est remarquable en ce qu'elle guide directement les organes élastiques, au moyen d'une cuvette **415** circonférentielle. Grâce à cette cuvette **415,** aucune goulotte additionnelle n'est requise. La cuvette **415** est de forme spécifiquement adaptée à guider directement les organes élastiques, telle qu'illustrée sur la Fig. 2.

La cuvette **415** a en section transversale, une forme générale d'arc de cercle complémentaire d'une forme générale en tronçon de tore autrement dit d'une spire des organes élastiques. La chambre **400** est remarquable en ce qu'elle peut comprendre en son sein des logements **400a** des organes élastiques ménagés à cet effet. A ce titre, la cuvette **415** peut être de forme discontinue autour de l'axe **X.**

La cuvette **415** est intégrée à la chambre en particulier depuis le bord externe de la chambre **400.**

Aux Fig. 2 à Fig.3C, la cuvette **415** délimite au moins une piste latérale **40L** de contact et une piste centrale **40C** de contact des organes élastiques. La piste centrale **40C** forme le fond de la cuvette **415.** Le fond de la cuvette **415** peut définir un diamètre extérieur **Dp1**. La piste centrale **40C** de la cuvette **415** peut être entièrement discontinue autour de l'axe **X.** La piste centrale **40C** de la cuvette **415** est formée d'au moins une paroi plane de contact, parallèle à l'axe **X,** qui peut définir en son centre un plan central **P0** de la cuvette. Le plan central **P0** contient un voile central **14** du système d'amortissement.

L'au moins une piste latérale **40L** est formée d'au moins une paroi plane **p1** de contact.

Cette paroi plane **p1** de contact est définie selon un angle d'inclinaison **θ1** par rapport au plan central **Pc.** Cette paroi plane **p1** de contact est prolongée d'un côté par un premier rayon de courbure **c1** reliant par exemple la paroi plane de la piste centrale **40C.**

En outre, la paroi plane **p1** de contact de la piste latérale **40L** peut être prolongée de l'autre côté par un second rayon de courbure **c1'** reliant par exemple le fond de la chambre **400.**

Chaque gorge à angle arrondie **251** est formée par un second rayon de courbure **c1'** de la cuvette. Le fond de la chambre **400** définit en son centre un diamètre médian **Dp** de la chambre.

Le fond de la cuvette **415** peut délimiter avec un diamètre médian **Dp** de la chambre des organes élastiques, une piste de guidage **Zg** des organes élastiques. Cette piste de guidage **Zg** est au moins partiellement formée par l'au moins une piste latérale **40** et par la piste central **40C.** Cette piste de guidage **Zg** est parcourue en fonctionnement par le centre de gravité **Gr** des ressorts.

Cette « cuvette **415** » peut être définie au moins par une gorge, en section transversale à angle arrondie, qui est notamment délimitée par plusieurs portions successives **c1, p1, c1'.** Autrement dit, une gorge à angle arrondie comprenant la piste centrale **40C** et l'au moins une piste latérale **40L.** Sans ces dernières, la chambre **400** ne serait pas à même à centrer et guider correctement les organes élastiques.

Cette gorge à angle arrondie **251** de la cuvette **415,** est définie depuis la masse d'inertie principale **11,** au niveau d'une portion de raccordement **13** du volant moteur, de préférence sous une forme amincie. Cette gorge à angle arrondie **251** s'étend en section transversale sur au moins un quart de cercle. Chaque gorge à angle arrondie **251** s'étend le long de la jupe **15** de montage, par exemple sous forme d'entaille. Les gorges à angle arrondie s'étendent chacune sur 45% à 55% du total de la cuvette **415.** La paroi plane **p1** de contact est de dimension strictement inférieure à la paroi plane de la piste centrale **40C.**

Au contraire dans le deuxième mode, ladite gorge à angle arrondie s'étend sur 60% à 75% du total de la cuvette **415.** La paroi plane de la piste centrale **40C** est alors de dimension axiale moins importante que la paroi plane **p1**. Avantageusement, la cuvette délimite une piste centrale **40C** de contact et deux pistes latérales **40L** l'une proximale l'autre distale de la coiffe de montage **150.**

Telles qu'illustrées sur les Fig. 3 à Fig. 3B, les deux pistes latérales **40L** distale et proximale sont disposées radialement de part et d'autre de la piste centrale **40C,** et notamment radialement de part et d'autre d'un plan central **Pc** de la cuvette perpendiculaire à l'axe **X.** A titre d'exemple, une piste latérale **40L** proximale délimite en section transversale, un seul rayon de courbure **c2** et notamment une paroi plane **p2**.

Dans cet exemple, une piste latérale **40L** distale délimite en section transversale, une alternance de parois planes **p1**, **p1**' et de rayons de courbure **c1, c1'**, **c1"**, ici au nombre de deux parois et de trois rayons.

Ces parois planes **p1, p1'** de contact de la piste latérale **40L** distale sont chacune de dimensions dites rectilignes qui peuvent être strictement supérieures à la paroi plane de la piste centrale **40C** de contact. Cette paroi plane **p2** de contact est définie selon un angle d'inclinaison **θ2** par rapport au plan central **Pc.** Les angles d'inclinaison **θ1** et **θ2** peuvent être identiques ou différents.

Chaque angle d'inclinaison **θ1**, **θ2** peut être compris entre 25 et 55 degrés, par exemple ici de 45 degrés. Cette paroi plane **p2** de contact de la piste latérale **40L** proximale est strictement inférieure à la paroi plane de la piste centrale **40C.** Les rayons de courbures **c1, c1', c1", c2** s'étendent sur des dimensions dites courbées différentes, mais ils sont construits par rapport à un même centre de construction dans la chambre **400.** Les parois planes **p1, p1', p2** de contact sont ainsi espacées axialement entre elles ;
Les rayons de courbures **c1, c1', c1", c2** sont également espacés axialement entre eux ;

Par ailleurs, la coiffe de montage **150** de la jupe est en section transversale de forme polygonale ou tronconique. Sur les figures, la coiffe de montage **150** est dimensionnée de telle manière qu'une partie de la hauteur des organes élastiques **4** dépasse la coiffe de montage.

Pour ce faire, le couvercle **20** peut comprendre un renfoncement **200,** réalisé par enfoncement de matière vers la chambre **400,** pour y loger cette partie haute des organes élastiques **4.** Alternativement, le renfoncement **200** du couvercle peut être réalisé en direction opposée à la chambre.

Par ailleurs, la cuvette **415** peut délimiter des rebords en surplomb **151** de la chambre **400** avec la coiffe de montage **150,** de préférence de formes discontinue autour de l'axe **X.**

La présente invention peut aussi s'appliquer à une cuvette **415** ayant un seul rebord en surplomb **151** de forme continue autour de l'axe **X.** Ceci permet de mieux retenir, guider et centrer les organes élastiques.

A ce titre, le fond de la cuvette **415** est ménagé au-delà du diamètre intérieur de la coiffe de montage **150.**

Dans un mode de réalisation non illustré, la cuvette **415** peut délimiter, avec la coiffe de montage de la jupe, un seul rebord en surplomb **151** de la chambre des organes élastiques, qui est continue sur 360 degrés.

Par ailleurs, le volant moteur **2** comprend une couronne de démarreur **17** qui est ménagée dans la jupe **15** de montage. Cette couronne annulaire 207 comprend une pluralité de fenêtres qui sont séparées les unes des autres par des doigts ou des fenêtres s'étendant dans la direction axiale, parallèlement à l'axe **X.**

La couronne de démarreur **17** est forgée sous forme d'arches **170** reliées entre elles, qui sont configurées pour donner un top au capteur de point mort haut. La périphérie externe, autrement dit la face de la jupe la plus éloignée de l'axe **X** réalise les arches **180.** L'intérieur des arches **170** délimite une paroi concave **172** discontinue, par exemple en section transversale sous une forme conique. Pour améliorer la fonction, les arches **170** délimitent entre elles une partie avancée discontinue sous forme des ailettes **171.**

Dans un mode de réalisation non illustré, la couronne de démarreur **17** peut être forgée sous forme de tronçons espacés angulairement entre eux, délimités par des colonnes. Ce qui forme un motif crénelé.

Par ailleurs, le volant moteur **2** comprend une couronne de synchronisation **18** qui est ménagée dans la masse d'inertie principale **11,** en particulier dans un épaulement **1800** issu de la masse d'inertie principale.

L'épaulement **1800** peut être de forme trapézoïdale, définissant par exemple un cône **1801.**

La couronne de synchronisation **18** est forgée sous forme d'arches **180,** reliées entre elles et qui sont configurées pour être disposées en regard d'un capteur apte à délivrer un signal représentatif de la position angulaire et/ou de la vitesse de la couronne de synchronisation. La périphérie externe, autrement dit la face de l'épaulement la plus éloignée de l'axe **X** réalise les arches **180.**

Dans un mode de réalisation non illustré, la couronne de synchronisation **18** peut être forgée sous forme de tronçons espacés angulairement entre eux, délimités par des colonnes. Ce qui forme un motif crénelé.

La jupe **15** de montage comprend en section transversale un amincissement de matière **dJ,** c'est-à-dire en section la portion d'épaisseur minimale ou la plus mince de la jupe par rapport à la dimension radiale de l'ensemble de la jupe **15.** Cette épaisseur minimale qui peut s'étendre jusqu'à 45% de son épaisseur initiale **d0.** En outre, cet amincissement de matière **dJ** est délimité entre les arches **180.**

Par ailleurs, le volant moteur est réalisé par différents traitements thermiques ou de surface, appliqués sur certaines parties du volant moteur pour renforcer localement leur rigidité.

Ces différents traitements thermiques sont illustrés à titre d'exemple sur les Fig. 2A à Fig. 2B.

Un premier traitement thermique par chauffe, par exemple avec trempe, est appliqué depuis la périphérie externe de la jupe **15** et en profondeur **p7, p7'** de la jupe **15,** préférence sur jusqu'à la moitié de la jupe. Cette profondeur **p7** définit l'intérieur des arches **170,** par exemple de l'ordre de 3,5 à 4,5 mm.
De cette manière, la dureté de la couronne de démarrage **17** est supérieure à la dureté de la cuvette;
Un deuxième traitement, par exemple sans trempe, est appliqué sur l'autre moitié de la jupe **15** de montage et la portion de raccordement **13** (référencé **p8).** Ainsi les zones **p7+p8** comprennent des traitements thermiques tandis le reste de la masse d'inertie principale peut être exempté de traitement. De cette manière, la dureté de la cuvette **415** est supérieure à la dureté de la couronne de synchronisation **18.**

En variante, la dureté de la cuvette **415** peut être inférieure à la dureté de la couronne de synchronisation **18.**

Les logements **400a** de la chambre **400** sont également remarquables en ce qu'ils sont délimités entre eux par l'ajout d'au moins une pale de butée **5** rapportée sur le moyeu central **21** de la masse d'inertie principale, contre lesquelles les extrémités **40** voisines des ressorts **4** sont élastiquement en butée. Les butées de la partie inférieure de l'amortisseur sont formées par une série de pales de butée, montées en porte-à-faux avec le plateau central **21.** Le nombre de pales de butée est identique au nombre de ressorts, ici au nombre de deux, répartie sous forme d'une paire de pales.

Les deux pales de butée **5** d'une paire sont de préférence espacées angulairement l'une de l'autre par rapport à l'axe de rotation, de sorte à être diamétralement opposées l'une de l'autre. Elles peuvent ainsi partager un même axe **S** perpendiculaire à l'axe **X.**

Chaque pale de butée **5** est rapportée et logée partiellement à l'intérieur du plateau central **210,** au niveau d'une partie d'élongation radiale **l2** définissant le corps de retenue **52** de la pale de butée.

Ce corps de retenue **52** de la pale est logé fixement dans le plateau central **210,** dans un logement spécifique du plateau central **210** ménagé à cet effet, nommé empreinte **25.**

On entend par « empreinte **25** » un relevé de forme, similaire à celle de la pale de butée **5,** pour les maintenir solidairement ensemble. Leurs formes sont complémentaires et prédéfinies lors de leur fabrication ; Une empreinte **25** est ménagée radialement sur l'extérieur du plateau central **210,** afin de déboucher dans la chambre **400.** Dans les exemples illustrés, chaque empreinte s'étend radialement d'un diamètre intérieur jusqu'à un diamètre extérieur. Le diamètre intérieur de l'empreinte est défini par une paroi interne **254.** Le diamètre extérieur de l'empreinte est défini par son ouverture débouchant dans la chambre. Une empreinte est délimitée angulairement entre deux bords radiaux **250.**

Chaque pale de butée **5** est en outre logée partiellement à l'intérieur de la chambre. Les pales de butée **5** ne coopèrent pas avec le fond de la chambre, elles sont montées en porte-à-faux.

Ces derniers délimitent un certain jeu axial **J** pour garder un montage libre de la pale avec les ressorts à loger dans la chambre. Deux ressorts sont disposés en butée de part et d'autre de la pale de butée **5** au niveau d'une tête externe, de forme évasée, nommée la tête de butée **51** adaptée aux ressorts. Chaque tête de butée est issue du prolongement du corps de retenue. L'ensemble peut former une forme tronconique ou sinusoïdale, par exemple en forme de « 8 ». Le corps de retenue **52** définit une élongation radiale **l2** qui est 1,2 fois supérieure à l'élongation radiale **l1** de la tête de butée. L'élongation radiale **l1** de la tête de butée **51** s'étend du diamètre intérieur de la chambre et peut, dans les exemples illustrés, s'étendre jusqu'au diamètre extérieur de la chambre. On précise que **11+12** = **10.** L'extrémité **40** dite spire extrémale d'un organe élastique, comprend une première portion configurée pour venir en appui contre une pale de butée **5** et une deuxième portion configurée pour venir en appui contre la deuxième demi-butée **35'** ménagée sur le couvercle **20.**

Ainsi, lors du fonctionnement, la rotation relative du deuxième élément par rapport au premier élément provoque la compression des ressorts **4** entre le voile **14,** les pales de butée **5** et la butée du couvercle.

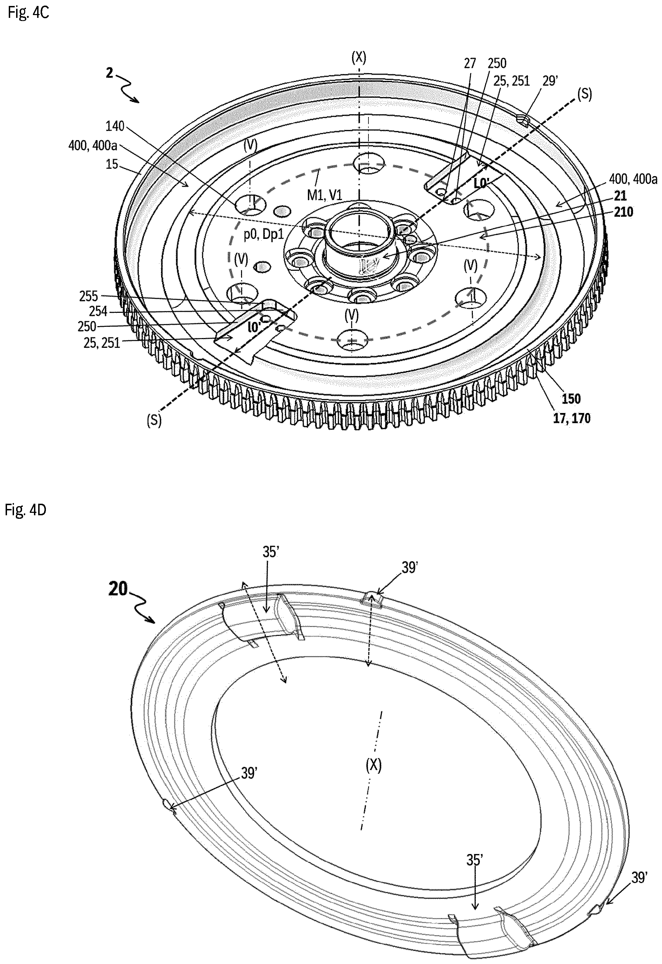

La Fig. 4D illustre un tel couvercle **20** destiné à être fixé sur la coiffe de montage **150** de manière à recouvrir au moins partiellement les organes élastiques **4** et les pales de butée **5.**

Des logements **400a,** notamment de dimensions identiques, sont délimités en une forme en portion de tore et s'étendent dans une zone proche de la périphérie de la première masse d'inertie principale.

On a illustré dans l'exemple des Fig. 5 et Fig. 5A, l'utilisation de goulottes **44** disposées dans les logements **400a** pour maintenir radialement le ressort hélicoïdal en position dans le logement **400a.**

Chaque goulotte **44** est notamment positionnée sur la partie externe (radialement) de la chambre, nommée aussi jupe **15** de montage. Par ailleurs, le couvercle peut être réalisé par usinage ou par pressage, en acier ou en fonte. Le couvercle **20** est par exemple fixé par une soudure par sertissage.

Pour simplifier l'assemblage mécanique bout à bout du couvercle **20** sur la jupe **15,** des moyens de positionnement **29', 39',** de formes complémentaires (formes concave - convexe, ou formes mâles-femelles) sont formés respectivement depuis le bord d'extrémité interne de la jupe **15** et depuis la périphérie externe du couvercle **20,** pour positionner axialement le couvercle par rapport à la jupe.

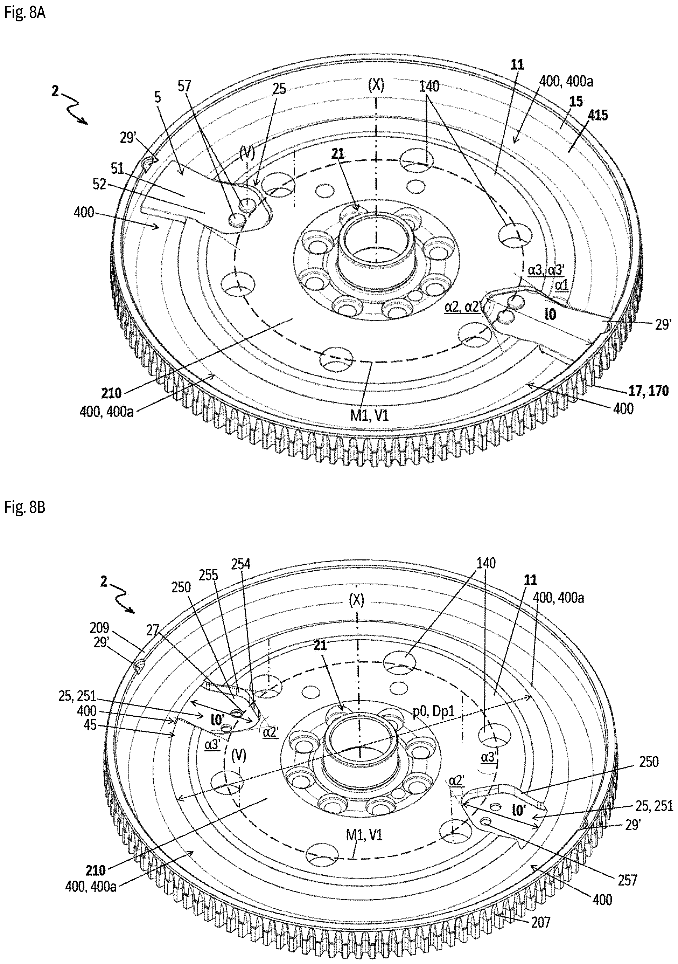

Ces moyens de positionnement **29', 39'** sont disposés axialement en regard l'un de l'autre, soit un par un, leur nombre devant être identique et limité. Ces derniers **29', 39'** peuvent être au nombre de deux (Fig. 4C et 7A à 9B) ou en variante de trois (Fig. 4D). Chaque moyen de positionnement **29'** ménagé dans le volant moteur **2** comprend un contour en forme circulaire, tel une demi-lune ou demi-cylindre creux.

En outre, chaque pale de butée **5** peut être disposé en regard d'un moyen de positionnement **29'** pour le couvercle. Par ailleurs, le voile **14** peut être fixé au deuxième élément, notamment par des organes de fixation 140 formant ici une série de rivets. Cette première série de rivets est logée dans des orifices de montage, d'axes **V**, du moyeu central **21,** ici du plateau central **210** ou premier élément.

Les orifices de montage sont formés traversant, c'est-à-dire sur toute l'épaisseur e0 axiale du plateau central **210** et ils sont éloignés du bain de graisse de la chambre **400,** pour éviter tous risques de fuite.

Ces rivets **140** fixant le voile **14** sont disposés radialement au même niveau, définissant un premier cercle d'implantation **V1** au niveau du plateau central **210** tel qu'illustré en Fig. 4C, Fig. 7A à Fig. 9B.

On va décrire maintenant plus en détails chaque pale de butée **5** et l'empreinte 25 correspondante.

Une pale de butée **5** comprend une élongation radiale **l0** dit longueur, qui est d'une dimension plus importante que sa largeur ou que l'extension radiale **l0'** d'une empreinte **25.** D'où une forme dite oblongue. L'élongation radiale **l0** est définit d'une extrémité interne **502** à une extrémité externe **501.**

L'extrémité externe **501** définit un bord convexe réalisant une tête de butée, évasée, de forme tronconique, d'extension angulaire, adaptable à tout type de spires ou d'extrémités **40** voisines cintrées des ressorts. Chaque pale de butée s'étend radialement à l'intérieur du plateau centrale **21,** selon une élongation radiale **10.** L'élongation radiale **l0** est supérieure à 1,4 fois l'extension radiale de la chambre.

Une pale de butée **5** peut être monocouche, réalisée par découpage, dans une feuille de tôle métallique, sensiblement fine, ayant une épaisseur **e0** sensiblement égale le long de la pale de butée. Cette épaisseur **e0** de pale de butée est strictement inférieure ou égale à la moitié de l'épaisseur **e2** du plateau central.

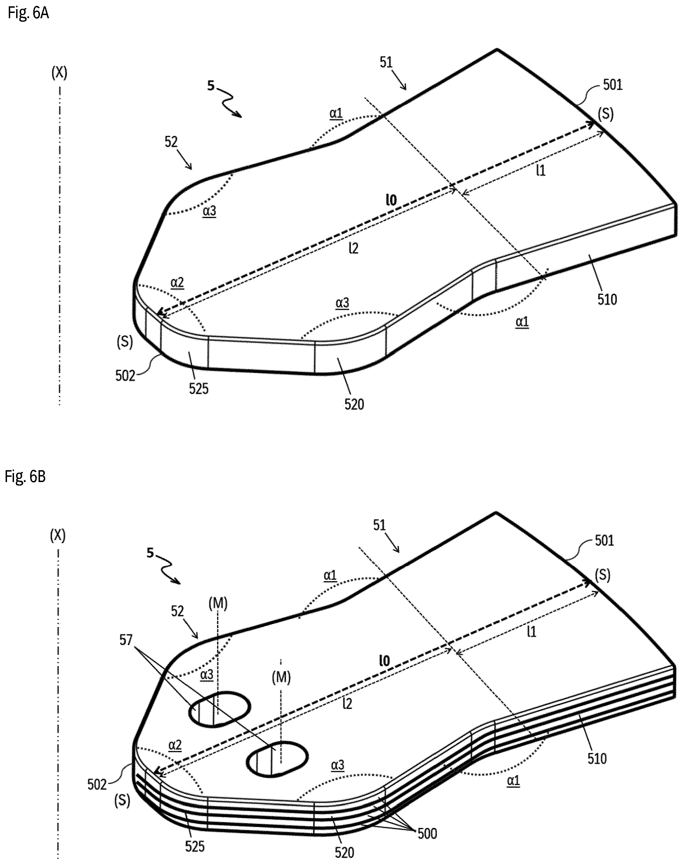

En variante, la Fig. 6B illustre une pale de butée **5** multicouche, composé d'un empilement axial de plusieurs couches **500** assemblées les unes sur les autres, ici au nombre de quatre.

Dans l'exemple illustré, des rivets passant par des orifices de montage **57** assemblent lesdites couches **500.** Mais il est aussi possible de pré-assembler ces couches **500** par collage ou soudage.

Chaque empreinte **25** est de forme complémentaire à une pale de butée afin de retenir cette dernière. Une telle complémentarité de formes peut être de type mâle-femelle, ou encore concave-convexe, afin de loger au moins en partie fixement la pale de butée **5** dans l'empreinte **25** correspondante. En outre, une empreinte **25** est délimitée entre deux bords radiaux **250,** opposés, et une paroi interne **254.**

La forme d'une pale de butée **5,** et donc d'une empreinte **25,** peut être symétrique, définie par un axe **S** de symétrie. De cette manière, on répartit équitablement des deux côtés les forces de réaction opposées, exercées par les ressorts et les bords latéraux de l'empreinte. Des congés **255** de l'empreinte, de formes complémentaire, coopèrent avec des congés **525** de raccordement de la pale de butée **5.** L'extérieur de l'empreinte débouche radialement dans la chambre, formant une ouverture radialement externe.

Une tête de butée **51** présente deux tranches **510, 520** latérales, opposées, ayant des surfaces planes de butée pour résister en fonctionnement normal à des couples très élevée supérieur à 250 Newton/ mètre. L'extrémité interne **502** définit un bord spécifique, ici plan et pourvu de congés **525** de raccordement, formés aux coins radialement interne de la pale de butée **5.** Ce bord spécifique de l'extrémité interne **502** et notamment ses congés **525** de raccordement, est adapté à être reçu dans l'empreinte **25.**

La pale de butée comprend un angle d'évasement **α1** sur chaque bord latéraux, adapté à recevoir l'extrémité des ressorts. L'empreinte complémentaire comprend un angle d'évasement **α1**' égale environ à l'angle **α1**. Ces angles d'évasement **α1, α1**' réduisent le stress et augmentent la capacité en couple.

Les Fig. 4C, Fig. 7B, Fig. 8B et Fig. 9B illustrent ces empreintes **25** à vide (avant montage des pales) de différents plateaux centraux **210.** Par ailleurs, chaque pale de butée **5** peut être insérée avec un jeu à l'intérieur d'une empreinte. Le jeu est radial et peut être ménagé depuis la paroi interne **254,** de sorte à ramener la pale de butée vers l'extérieur de l'empreinte, en vue d'un positionnement final assemblé de la pale au sein de l'empreinte.

On va décrire maintenant plus en détails divers moyens de fixations **6, 26, 7, 57, 57'** des pales de butée.

Une empreinte **25** comprend des moyens de fixations **6, 26, 7, 57, 57'** variés pour maintenir la position finale de la pale de butée. Les moyens de fixations sont éloignés du bain de graisse de la chambre **400,** pour éviter tout risques de fuite. En particulier, au moins certains des moyens de fixation d'une pale de butée sont agencés au plus près de l'axe de rotation, de préférence depuis le diamètre intérieur de l'empreinte, par exemple en étant localisé au plus près de la paroi interne **254** de l'empreinte.

Par ailleurs, l'empreinte **25** est dimensionnée pour réaliser des précontraintes radiales sur la pale de butée, lors de son insertion dans l'empreinte ou son montage avec les fixations centrales **7** rapportées.

Dans les exemples illustrés, des moyens de fixation de pale sont ménagés dans l'empreinte, agencés :
- au plus près de l'axe **X** de rotation, par exemple sur la paroi interne **254** de l'empreinte ; Autrement dit à la jonction entre la forme du corps de retenue et celle de la tête de butée ; et/ou
- au plus loin de l'axe **X** de rotation, par exemple par une section de bords latéraux **250** délimitant l'ouverture de l'empreinte, sous forme de pincement ; et/ou
- dans une région centrale des bords latéraux du corps de retenue **52** ;

Par ailleurs, des moyens de fixation de pale comprennent des éléments de rétention axiale. En complément, ces éléments de rétention axiale sont ménagés par retenue de matière d'une empreinte. La Fig. 4B illustre un exemple de retenue de matière réalisée par exemple par renflement de matière, pour former un bourrelet de matière retenant axialement la pale à l'intérieur de l'empreinte.

Un élément de rétention axiale peut être ménagé partiellement depuis chaque bord latéral de l'empreinte, par exemple sous forme d'au moins une retenue de matière. Ainsi ces bords latéraux bloquent la pale de butée dans les deux sens de rotation horaire et antihoraire de l'axe de rotation.

Par ailleurs, la pale de butée peut être fixée dans l'empreinte par des fixations centrales **7,** qui sont logées traversant dans des premiers orifices **57** de montage des pales de butée.

Dans le premier mode de réalisation, les fixations centrales **7** de la pale sont rapportées sous forme d'une série de rivets, d'entretoises ou de goupilles, également logés traversant dans des deuxièmes orifices **257** de montage des empreintes **25.** Les orifices **257** de montage sont de préférence circulaires. Les orifices **57, 257** de montage sont coaxiaux, d'axe **M.** Ils sont traversant, respectivement sur toute l'épaisseur **e0** de la pale et toute l'épaisseur **e2** du plateau. Les orifices **57, 257** de montage (par pale de butée **5** et empreinte **25)** sont répartis au nombre de deux, disposés radialement au même niveau. Ces orifices de montage **57, 257** sont éloignés du bain de graisse de la chambre **400,** ici localisés au plus près de la paroi radiale **254** de l'empreinte. Cette série de rivets **7** définit un deuxième cercle d'implantation **M1** au niveau du plateau central **210.** Les cercles d'implantation **V1** et **M2** sont par exemple confondus.

Les orifices **57, 257** peuvent être au nombre de deux par pale et empreinte, disposés radialement au même niveau, ou d'un seul dans une variante non illustrée. Les orifices **57** peuvent présenter des contours variés. Les Fig. 4E à Fig. 6 illustrent un exemple d'orifices **57** de montage circulaire.

La Fig. 6B illustre des orifices **57** de montage oblongue. Dans un autre mode non illustré, les fixations centrales **7** de la pale peuvent être issus de l'empreinte, par exemple d'un ou de plusieurs ergots, ménagés en saillie depuis l'empreinte. Par ailleurs, les moyens de fixation sont en partie réalisés par coopération de formes de la pale avec l'empreinte **25.** Dans le premier mode, la pale de butée **5** et l'empreinte **25** complémentaire ont une forme sensiblement rectangulaire ou trapézoïdale.

Les Fig.4B à Fig.4C illustrent une paroi radiale **254** sensiblement perpendiculaire aux bords latéraux.

Les angles d'évasement **α1**, **α1**' sont ici égales à environ 350 degrés.

Dans les autres modes de réalisation, similaires au premier mode de réalisation, on a illustré au contraire que les bords radiaux **250** d'une empreinte **25** et les tranches de la pale de butée, forment des contre-dépouilles **255,** dite concave-convexe alternée, en forme « 8 » ou heptagone, ou encore en forme de sablier. Il est possible de réaliser des formes de polygones ayant un nombre plus petit ou plus grand de côtés d'appui (pentagone, hexagone, octogone, etc) avec les ressorts et les bords de l'empreinte.

Dans ces situations, chaque pale de butée **5** comprend alors deux rétrécissements de matière, de formes concaves, délimitant sous formes évasées la tête de butée et le corps de retenue. Chaque rétrécissement de matière est défini par un angle d'évasement **α1, α1**' plus petit, ici égal à environ 330 degrés.

En outre, les congés **525** de la pale de butée sont de formes coniques, définissant un angle de retenue **α2**. De même la paroi interne **254** et notamment les congés **255** de l'empreinte, peuvent être en section de formes coniques, définissant un angle de retenue **α2**', environ égale à l'angle de retenue **α2** de la pale.

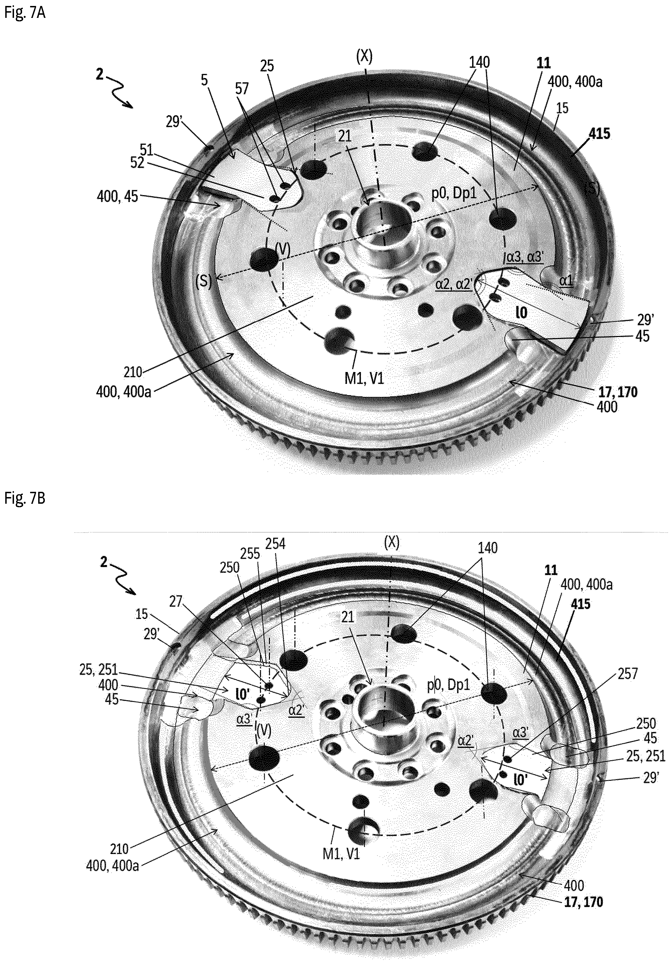

Les Fig.7A à Fig. 9B illustrent en détails de telles contre-dépouilles **255** de l'empreinte **25,** qui bloquent tout déplacement radial de la pale de butée en direction de la chambre. Chaque contre-dépouilles **255** forment un angle de calibrage **α3**' pour l'arrêt angulaire et radial du corps de retenue.

Dans le deuxième mode de réalisation, il est possible de pré-délimiter les logements **400a.** La chambre **400** comprend alors des zones d'arrêt marquées dit marquages d'arrêt **45** additionnels, visibles pour l'opérateur, recevant partiellement des extrémités **40** voisines des organes élastiques, afin de les disposer correctement en même temps que lesdites pales. Les marquages d'arrêt sont au nombre de deux par empreinte, répartis angulairement de part et d'autre d'une pale de butée **5.** Chaque zone d'arrêt marquée est réalisée à l'intérieur de la chambre **400,** de préférence par usinage ou emboutissage.

Dans le troisième mode de réalisation, similaires au premier mode de réalisation, on a illustré au contraire aucun marquages d'arrêt, de sorte que la chambre **400** est continuellement plane sur 360 degrés.

Dans le quatrième mode de réalisation, similaires au premier mode de réalisation, les moyens de fixation de pale se font au contraire par des retenues de matière **57'** réalisée par écrouissage, nommées points d'écrouissage. On a ainsi supprimé les orifices de montage de pale ou d'empreinte. Les étapes de montage et perte de matière sont réduites, toute fuite de graisses rentrant dans l'empreinte est contenue.

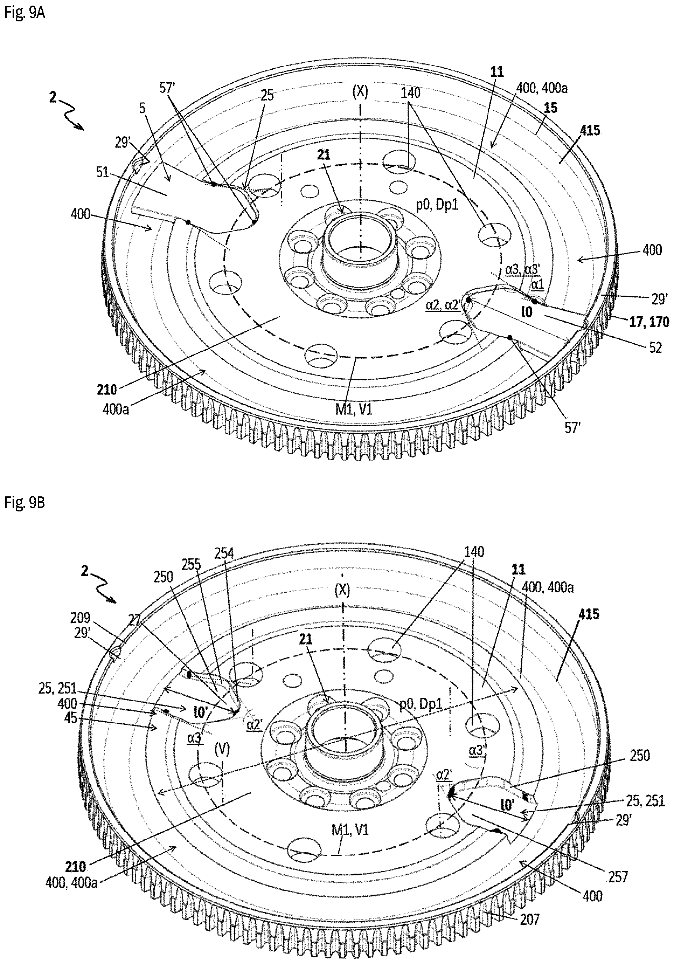

Ces retenues de matière **57',** ici au nombre de trois, sont formées sur chaque bord **250, 254** de l'empreinte. Sur les Fig. 9A à Fig. 9B, elles agissent par compression sur des sections de la pale de butée.

Dans un mode de réalisation non illustré, ces retenues de matière **57'** peuvent être remplacées par des points de soudures déposées préalablement au sein d'une empreinte.

Bien que l'invention ait été décrite en liaison avec un seul mode de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'invention ne saurait toutefois se limiter aux moyens et configurations décrits et illustrés ici, et elle s'étend également à tout moyen ou configuration équivalents et à toute combinaison technique opérant de tels moyens. En particulier, la forme d'une pale et de l'empreinte peut être modifiée sans nuire à l'invention, dans la mesure où ces composants, in fine, remplissent les mêmes fonctionnalités que celles décrites dans ce document. Dans les revendications, tout signe de référence entre parenthèses ne saurait être interprété comme une limitation de revendication.

## Revendications

1. Volant moteur (2) pour un engin de mobilité, d'axe de révolution (X), comprenant :
- une masse d'inertie (11,210) principale, configurée pour introduire une force dans le volant moteur (2) ;
- une jupe (15) issue du prolongement de la masse d'inertie (11, 210) principale, à l'extrémité de laquelle est définie une coiffe de montage (150) apte à recevoir un couvercle (20) ;
- un système d'amortissement (3) comprenant au moins une série d'organes élastiques (4) ;
- une chambre (400) réalisée conjointement dans la matière de la masse d'inertie (11, 210) principale et de la jupe (15), qui loge au moins en partie les organes élastiques (4), et dont le bord externe de la chambre (400) ménage une cuvette (415) circonférentielle destinée à guider directement les organes élastiques (4), la cuvette (415) ayant en section transversale une forme générale polygonale ou en arc de cercle complémentaire d'une forme générale en tronçon de tore des organes élastiques (4), délimitée au moins en partie par des pistes latérales (40L) et une piste centrale (40C) de contact de la chambre des organes élastiques (4),
**caractérisé en ce que** :
- au moins l'une des pistes latérales (40L) est formée d'une paroi plane (p1) de contact qui est de dimension strictement supérieure à une paroi plane (p0) de la piste centrale (40C) de contact de la cuvette (415) ; et/ou
- un plan central (Pc) de la cuvette (415) est formé perpendiculaire à la piste centrale (40C) de contact de la cuvette (415) et contient un voile central (14) du système d'amortissement (3); et
- au moins l'une des pistes latérales (40L) est délimitée en section transversale par une paroi plane (p1, p2) de contact définie selon un angle d'inclinaison (θ1, θ2) par rapport au plan central (Pc), prolongée d'un côté par un premier rayon de courbure (r1, r2) et par exemple de l'autre côté par un second rayon de courbure (r1') ;
- la piste latérale (40L) distale de la coiffe de montage (150) comprend une alternance de parois planes et de rayons de courbure définissant le fond de la chambre (400) des organes élastiques (4).

2. Volant moteur (2) selon la revendication 1, dans lequel la cuvette (415) délimite :
- avec la coiffe de montage (150) au moins un rebord en surplomb (151) de la chambre (400) des organes élastiques (4) ; et/ou
- avec la masse d'inertie (11, 210) principale, des gorges à angle arrondie (251) de la chambre (400) des organes élastiques (4).

3. Volant moteur (2) selon la revendication 1 ou 2, dans lequel la cuvette (415) comprend en section selon un plan passant par l'axe de révolution (X) :
- des rayons de courbure (r1, r2, r3) espacés entre eux, de dimensions courbées différentes ;
- des rayons de courbure (r1, r2, r3) espacés entre eux, formés depuis un même centre de construction (Gc) ;
- un fond (Fc) de la cuvette (415) ménagé au-delà du diamètre intérieur de la coiffe de montage (150) de la jupe (15) de montage;
- un fond (Fc) de la cuvette (415) délimitant, avec un diamètre médian (Dp) de la chambre, une zone de guidage (Zg) sur laquelle est parcouru en fonctionnement le centre de gravité (Gr) des organes élastiques (4).

4. Volant moteur (2) selon l'une des revendications 1 à 3, dans lequel il comprend en outre :
- une forme circulaire de ladite chambre (400) des organes élastiques (4), de centre l'axe de révolution (X), ladite chambre (400) des organes élastiques (4) étant configurée pour être étanche et contenir un agent lubrifié ;
- une forme discontinue de ladite cuvette (415) circonférentielle autour de l'axe de révolution (X)
- une forme tronconique en section transversale de ladite coiffe de montage (150) de la jupe (15) de montage ;
- une couronne de démarreur (17) forgée sous forme d'arches (170) ou de tronçons dans la jupe (15) de montage ;
- une partie des organes élastiques (4) qui surpasse la coiffe de montage (150) de la jupe (15) de montage, le couvercle (20) étant enfoncé pour y loger à l'intérieur ladite partie des organes élastiques (4) surpassant ;
- une couronne de synchronisation (18) forgée sous forme d'arches (180) ou de tronçons dans la masse d'inertie (11, 210) principale qui sont destinées à être disposées en regard d'un capteur apte à délivrer un signal représentatif de la position angulaire et/ou de la vitesse de la couronne de synchronisation (18).

5. Volant moteur (2) selon la revendication 4, dans lequel il comprend en outre :
- un amincissement de matière (dJ) de la jupe (15) de montage, délimité en section transversale entre les arches (170) de la couronne de démarreur et la cuvette (415), s'étendant de 20% jusqu'à 55% de l'épaisseur initiale (d0) de la jupe (15) de montage;
- une paroi arrondie ou concave discontinue délimitée par l'intérieur des arches (170) de la couronne de démarreur (17);
- un épaulement (1800) trapézoïdale issu de la masse d'inertie (11, 210) principale, dont l'une des faces réalise les arches (180) de couronne de synchronisation (18), de préférence la plus éloignée de l'axe de révolution (X).

6. Volant moteur (2) selon la revendication 4 ou 5, dans lequel différents traitements
thermiques ou de surface sont appliqués sur certaines parties du volant moteur (2) pour renforcer localement leur rigidité, de préférence de sorte à réaliser :
- une dureté de la couronne de démarreur (17) qui est supérieure à celle de la cuvette (415),
- une dureté de la cuvette (415) qui est supérieure à celle du reste de la masse d'inertie (11, 210) principale, et notamment qui est supérieure à la dureté de la couronne de synchronisation (18) ;

7. Volant moteur (2) selon l'une des revendications précédentes, dans lequel il comprend
au moins une pale de butée (5) qui est logée partiellement dans la chambre (400) entre les extrémités (40) voisines de deux organes élastiques (4) adjacents, la pale de butée (5) étant également logée partiellement à l'intérieur de la masse d'inertie (11, 210) principale et rapportée fixement à la masse d'inertie (11, 210) principale,
le volant moteur (2) comprend de préférence une paire de pales de butée (5) diamétralement opposées par rapport à l'axe de révolution (X).

8. Volant amortisseur (2) selon la revendication 7, dans lequel la pale de butée (5) est
composée
- d'un corps de retenue (52) logé à l'intérieur de la masse d'inertie (11, 210) principale et d'une tête de butée (51) issue du prolongement du corps de retenue (51), de forme pleine et évasée adaptée aux ressorts (4), définissant de préférence avec le corps de retenue (52) un angle d'évasement (α1) qui est compris entre 110 et 195 degrés, en particulier un rétrécissement de matière d'un angle d'évasement (α1) compris entre 130 et 160 degrés ;
- et/ou d'au moins une feuille de tôle métallique, de forme oblongue, par exemple
- d'un empilement axial de plusieurs couches assemblées,
- d'une épaisseur (e0) inférieure ou égale à la moitié de l'épaisseur (e2) du plateau central (210),
- d'une élongation radiale (l0), supérieure ou égale à 45% à l'extension radiale (p0) d'un plateau central (210) de la masse d'inertie (11, 210) principale et supérieure ou égale à 1,4 fois l'extension radiale de la chambre (400) ;

9. Volant amortisseur (2) selon la revendication 7 ou 8, dans lequel il comprend en outre :
- une empreinte (25) de forme complémentaire pour retenir une pale de butée (5), ladite empreinte (25) étant ménagée radialement depuis le diamètre intérieur (Dp1) de la chambre (400) des organes élastiques (4) ; et/ou
- des moyens de fixation de la pale de butée (5), agencés depuis le diamètre intérieur de l'empreinte (25) et configurés pour être reçus dans des orifices de montage (27) de la pale de butée (5), en étant par exemple
- rapportés (7, 57) et reçus dans des orifices de montage (57) du plateau central (210), ou
- issus de matière (6, 26, 57') du plateau central (210), par exemple sous forme d'ergots ; et/ou
- des éléments de rétention axiale (6) de la pale de butée (5), issus de préférence de la matière de l'empreinte (25), par exemple des renflements de matière (26) ou des points d'écrouissage discontinue (57') ; et/ou
- des bords radiaux (250) en forme de contre-dépouilles (255) retenant radialement la pale de butée (5) ; et/ou
- des marquages additionnels d'arrêt (45) des extrémités (40) voisines des organes élastiques (4), réalisés à l'intérieur de la chambre (400) et disposés angulairement de part et d'autre de l'au moins une empreinte (25).
